# EUROPÄISCHE PATENTSCHRIFT

(11) **EP 3 322 304 B1**
(45) Veröffentlichungstag und Bekanntmachung des Hinweises auf die Patenterteilung: **22.05.2019**
(21) Anmeldenummer: 15739174.9
(22) Anmeldetag: 16.07.2015
(51) Int. Cl.: A23G 1/06, A23G 1/00, A23N 5/08, A23N 15/10

(54) **VERFAHREN UND VORRICHTUNG ZUM ÖFFNEN VON KAKAOFRÜCHTEN**
METHOD AND DEVICE FOR OPENING COCOA FRUIT
MÉTHODE ET DISPOSITIF D'OUVERTURE DE CABOSSES DE CACAO

(43) Veröffentlichungstag der Anmeldung: 23.05.2018
(73) Patentinhaber: Alfred Ritter GmbH & Co. KG, 71111 Waldenbuch (DE)
(72) Erfinder: WIBERG-WAGNER, Hans-Ulrich, 72076 Tübingen (DE)
(74) Vertreter: Wasmuth, Rolf
(86) Internationale Anmeldenummer: PCT/EP2015/001471
(87) Internationale Veröffentlichungsnummer: WO 2017/008823

(56) Entgegenhaltungen:
- WO-A1-2007/112510
- DE-C- 315 018
- FR-A1- 2 524 271
- FR-A1- 3 002 117
- GB-A- 191 322 086

## Beschreibung

Die Erfindung betrifft ein Verfahren zum Öffnen von ganzen Kakaofrüchten zum Ernten der in den Außenschalen der Frucht eingeschlossenen Kakaobohnen sowie eine Vorrichtung zur Durchführung dieses Verfahrens.

Die Kakaofrucht ist die Frucht des Kakaobaums und von der Form her oval bis zylindrisch mit Längen von etwa 10 cm bis 30 cm. Eine Kakaofrucht kann zwischen 300 g und 800 g wiegen und hat eine Außenschale, die ledrig und äußerst hart ist. Im Inneren der Kakaofrucht befinden sich etwa 30 bis 60 Kakaobohnen, die in fünf Längsreihen an einer Plazenta angeordnet sind, über die sie bis zu ihrer Reife mit Nährstoffen versorgt werden. Die Kakaobohnen haben eine Größe von etwa 2 cm bis 4 cm Länge und 1,2 cm bis 2 cm Breite und sind von der Form her oval oder elliptisch. Die Kakaobohnen sind von einem dünnen, weißlichen Fruchtfleisch umgeben.

Zum Ernten der Kakaobohnen muss die Außenschale der Kakaofrucht aufgebrochen werden, wobei die Kakaobohnen möglichst unverletzt bleiben sollten. Das Öffnen erfolgt meist händisch mittels einer Machete und ist eine zeitaufwendige, mühsame Arbeit.

Die FR 3 002 117 A1 offenbart ein Verfahren zum Öffnen von Kakaofrüchten zum Ernten der in den Außenschalen der Kakaofrucht eingeschlossenen Kakaobohnen. Hierzu wird die Kakaofrucht eingeschnitten und aufgebrochen, und dabei auf einer Fördereinrichtung ausgerichtet und bewegt.

Aus der WO 2007/112510 A1 ist eine Vorrichtung bekannt, welche zum Fördern und Ausrichten von Kakaofrüchten vor deren Aufbrechen zwei V-förmig angestellte Förderbänder verwendet, um die Früchte einer Einschneide- und Aufbrechvorrichtung zuzuführen. Dabei werden die Früchte vom Förderband in die Einschneidevorrichtung abgeworfen.

Der Erfindung liegt die Aufgabe zugrunde, ein Verfahren sowie eine Vorrichtung zum Öffnen von ganzen Kakaofrüchten zum Ernten der in den Außenschalen der Frucht eingeschlossenen Kakaobohnen anzugeben.

Die Aufgabe wird erfindungsgemäß nach den Merkmalen des Anspruchs 1 und des Anspruchs 16 gelöst.

Nach dem erfindungsgemäßen Verfahren wird die Kakaofrucht auf einem Förderband in Längsrichtung ausgerichtet und - auf dem Förderband - in ihrer ausgerichteten Längsrichtung festgelegt. Die auf dem Förderband gehaltene Kakaofrucht wird längs des Förderweges an einem Messer vorbeigeführt, welches in die Außenschale der Kakaofrucht einschneidet. Die Schnitttiefe des Messers in die Außenschale ist größer als die Hälfte der Dicke der Außenschale, aber vorzugsweise geringer als die maximale Dicke der Außenschale, so dass die in der Außenschale liegenden Kakaobohnen nicht verletzt werden. Die so an- oder aufgeschnittene Kakaofrucht wird aufgebrochen und danach - zum Trennen von Außenschale und Kakaobohnen - abgeworfen.

Zur Durchführung des Verfahrens ist wesentlich, dass die Kakaofrucht in einer definierten Richtung auf dem Förderband fixiert wird, um dann zum Öffnen an einem Messer vorbeigeführt zu werden. Das Messer muss so positioniert sein, dass es in die Außenschale der Kakaofrucht einschneidet, wobei die Schnitttiefe so zu wählen ist, dass die in der Kakaofrucht liegenden Kakaobohnen nicht verletzt werden. Nach dem Aufbrechen der geschnittenen Kakaofrucht liegen die Kakaobohnen frei und können weiterverarbeitet werden.

Vorteilhaft wird die geschnittene Kakaofrucht längs des Förderweges nach dem Messer an einem Keilelement vorbeigeführt, welches in die Schnittfuge des Messers eingreift und über die Keilwirkung die Kakaofrucht aufbricht. Schneiden und Aufbrechen der Kakaofrucht erfolgen vorteilhaft zeitlich nacheinander. Dabei kann es vorteilhaft sein, das Messer und das Keilelement in Förderrichtung so eng benachbart anzuordnen, dass noch während des Aufschneidens der Kakaofrucht durch das Messer das in Förderrichtung folgende Keilelement bereits in die Schnittfuge des Messers eingreift. Dabei kann von Vorteil sein, dass durch den noch bestehenden Eingriff des Messers die Schnittfuge leicht offen gehalten wird, was einen sicheren Eingriff des Keilelementes zum Trennen oder Aufbrechen der Außenschale begünstigt.

Die in Längsrichtung ausgerichtete Kakaofrucht wird zweckmäßig zwischen zwei Förderbändern fixiert und mittels dieser Förderbänder in der fixierten Stellung auf dem Förderband in Förderrichtung zum Messer und dem Keilelement bewegt. Dabei kann es vorteilhaft sein, die Kontur der Kakaofrucht in einer zwischen den Förderbändern ausgebildeten Aufnahme zu halten. Eine derartige Aufnahme kann insbesondere durch Vertiefungen der Transportrollen des Förderbandes gebildet sein.

Vorteilhaft werden die Förderbänder in Richtung auf die Kakaofrucht mit einer Drucckraft belastet. Die Druckkraft wirkt mittelbar auf die Kakaofrucht, wodurch - durch Einstellung der Druckkraft - eine Verformung der Kakaofrucht bewirkt werden kann. Dabei ist die Druckkraft derart eingestellt, dass sich die Kakaofrucht so weit verformt, dass sich die Außenschale der Kakaofrucht von der inneren Frucht, nämlich der Pulpa mit den Kakaobohnen, abhebt. Zwischen der Innenseite der Außenschale und der Pulpa mit den Kakaobohnen bildet sich ein Hohlraum aus. Die auf die Kakaofrucht ausgeübte Druckkraft steht senkrecht zu der Messerebene, so dass sich der Hohlraum in der Ebene der Messer ausbildet. So ist gewährleistet, dass bei einem zu tiefen Einschneiden der Messer dieses auf den Hohlraum trifft und nicht in die Pulpa eindringt, so dass keine Kakaobohnen durch das Messer verletzt werden können. Durch die Bildung des Hohlraums in der Schnittebene durch Aufbringen einer Druckkraft auf die Kakaofrucht senkrecht zur Schnittebene wird ein sicheres Aufschneiden der Kakaofrucht ohne Verletzung der inneren Kakaobohnen erzielt.

Zweckmäßig schneidet das Messer die Kakaofrucht in Längsrichtung von der Spitze zum Stengelansatz oder vom Stengelansatz zur Spitze, je nachdem, wie die Kakaofrucht in Längsrichtung auf dem Förderband ausgerichtet wird.

Um ein sicheres Einschneiden in die Außenschale der Kakaofrucht zu gewährleisten, ist vorgesehen, das Messer an die Außenschale anzudrücken, insbesondere federnd anzudrücken. Dabei wird das Messer durch die in Förderrichtung bewegte Kakaofrucht rotierend angetrieben, weshalb das Messer zweckmäßig als Rotationsmesser ausgebildet ist.

In vorteilhafter Weiterbildung des Verfahrens ist vorgesehen, die Kakaofrucht zwischen zwei auf beiden Längsseiten des Förderbandes liegenden Messern hindurchzuführen, um die Kakaofrucht in Längsrichtung auf beiden Seiten vorzugsweise gleichzeitig zu schneiden.

Zum Aufbrechen der Kakaofrucht wird das Keilelement in die Schnittfuge des Messers in der Außenschale der Kakaofrucht gedrückt, insbesondere federnd eingedrückt. Dabei ist das an die Kakaofrucht angedrückte Keilelement als Tellerscheibe oder dgl. ausgebildet, die von der in ihrer Förderrichtung bewegten Kakaofrucht rotierend angetrieben ist.

Entsprechend der Anordnung der Messer wird die Kakaofrucht zwischen zwei auf beiden Längsseiten des Förderbandes liegenden Keilelementen hindurchgeführt, die zumindest zeitweise gleichzeitig in die Schnittfugen der Kakaofrucht eindringen, wodurch ein einfaches Öffnen oder Aufbrechen der Kakaofrucht unter Nutzung der Vorwärtsbewegung des Förderbandes erzielt ist.

Die geöffnete Kakaofrucht kann auf einen rüttelnden Stangenrost abgeworfen werden, der die Kakaobohnen von den Teilhälften der Außenschale trennt. Die Kakaobohnen fallen durch den Stangenrost auf einen rüttelnden Gitterrost, über den die Kakaobohnen von der strangförmigen Plazenta getrennt werden.

Eine erfindungsgemäße Vorrichtung zum Ernten von Kakaobohnen, die in einer Außenschale einer Kakaofrucht eingeschlossen sind, weist eine Schütte zum Aufgeben von Kakaofrüchten auf ein erstes Förderband auf. Dieses erste Förderband läuft unter einer Abzugsöffnung der Schütte in Förderrichtung durch, wobei ein zweites Förderband in Förderrichtung nach der Schütte oberhalb des ersten Förderbandes verläuft. Zumindest einige der Transportrollen der Förderbänder sind federnd gelagert, wobei zwischen den Transportrollen und den von ihnen geführten Förderbändern ein Aufnahmespalt zur klemmenden Fixierung einer Kakaofrucht begrenzt ist. Zwischen der Schütte und einem Abwurf der Förderbänder sind mindestens ein Messer und mindestens ein auf die Schnittebene des Messers ausgerichtetes Keilelement vorgesehen, wobei sowohl das Messer als auch das Keilelement seitlich in den Aufnahmespalt zwischen den Förderbändern einragen. Die Förderrichtung der Förderbänder und die Schnittebene der Messer sowie die Keilebene der Keilelemente liegen zueinander parallel.

Das Messer ist vorzugsweise ein Rotationsmesser, welches - ohne eigenen Antrieb - frei rotierend gelagert ist. Das Rotationsmesser ist an einem Träger gehalten, der in Richtung in den Aufnahmespalt kraftbelastet ist. Um ein einfaches Aufschneiden der Kakaofrüchte zu gewährleisten, wird auf beiden Längsseiten der Förderbänder zumindest je ein Messer angeordnet, wobei die Messer eine gemeinsame Schnittebene aufweisen. Diese Schnittebene erstreckt sich zwischen den Förderbändern.

Das Keilelement zum Aufbrechen der Kakaofrucht ist vorzugsweise als Rotationselement gestaltet, insbesondere als Tellerscheibe, wobei das Rotationselement auf Höhe des Messers angeordnet ist und - ohne eigenen Antrieb - frei rotierend gelagert ist. Das Keilelement ist an einem Träger gehalten, der in Richtung in den Aufnahmespalt zwischen den Förderbändern kraftbelastet ist.

Für ein sicheres Aufbrechen der Kakaofrucht ist es zweckmäßig, auf beiden Längsseiten der Förderbänder zumindest je ein Keilelement anzuordnen, wobei die Keilelemente eine vorzugsweise gemeinsame Keilebene bestimmen.

Die Transportrollen der Förderbänder weisen eine konkave Mantelfläche auf, die insbesondere hyperboloid ausgebildet ist. Die Mantelfläche der Transportrollen bildet einen Teilaufnahmeraum für die Form der Kakaofrucht und sichert diese in ihrer ausgerichteten Lage auf dem Förderband.

Die Abzugsöffnung der Schütte erstreckt sich zweckmäßig in Förderrichtung des Förderbandes als Längsöffnung, wobei die Form der Längsöffnung verbunden mit der Bewegung des darunter laufenden Förderbandes die Ausrichtung der Kakaofrüchte in Längsrichtung bewirkt. Dabei sind insbesondere die Transportrollen mit einer konkaven, insbesondere hyperboloiden Mantelfläche ausgebildet, wodurch eine Teilaufnahme für die Kakaofrucht gebildet ist, welche die Ausrichtung der Kakaofrucht in ihrer Längsrichtung unterstützt.

Vorzugsweise ist die Abzugsöffnung der Schütte durch zwei Richtleisten begrenzt, die sich in Längsrichtung der Längsöffnung erstrecken und quer zur Förderrichtung einen insbesondere einstellbaren Abstand voneinander aufweisen, der dem größten Durchmesser der zu schneidenden Kakaofrucht zweckmäßig angepasst ist, derart, dass die Kakaofrucht zwischen den Richtleisten in Längsrichtung ausgerichtet und an das Förderband übergeben wird. Dabei wirken die Richtleisten und/oder das Förderband bzw. dessen Bewegung und/oder die in den Transportrollen gebildeten Aufnahmen zum Zwecke der Ausrichtung der Kakaofrucht in Längsrichtung zusammen.

Weitere Merkmale der Erfindung ergeben sich aus den weiteren Ansprüchen, der Beschreibung und der Zeichnung, in der das Verfahren sowie die Vorrichtung zum Öffnen von ganzen Kakaofrüchten zum Ernten der in den Außenschalen der Frucht eingeschlossenen Kakaobohnen mit weiteren Merkmalen beschrieben ist. Es zeigen:
- Fig. 1A bis 1C: in schematischer Darstellung den Transportweg einer Kakaofrucht längs eines Förderweges mit am Förderweg angeordneten Messern,
- Fig. 1D: in schematischer Darstellung eine Seitenansicht eines Messers,
- Fig. 2: in schematischer Darstellung die fixierte Lage einer Kakaofrucht zwischen zwei Förderbändern,
- Fig. 3A bis 3C: in schematischer Darstellung den Transport einer Kakaofrucht zwischen Keilelementen, die die angeschnittene Außenschale der Kakaofrucht öffnen oder aufbrechen,
- Fig. 4: einen Schnitt durch ein Keilelement gemäß Fig. 3A,
- Fig. 5: in schematischer Darstellung eine in zwei Teile aufgebrochene Kakaofrucht,
- Fig. 6: eine perspektivische Ansicht auf eine Ausführungsform einer Vorrichtung zum Öffnen von ganzen Kakaofrüchten,
- Fig. 7: eine Seitenansicht der Vorrichtung nach Fig. 6,
- Fig. 8: eine Draufsicht auf die Vorrichtung nach Fig. 6,
- Fig. 9: eine Stirnansicht der Vorrichtung nach Fig. 6,
- Fig. 10: einen schematischen Schnitt durch die Vorrichtung nach Fig. 6 mit Blick auf die auf beiden Seiten der Förderbänder angeordneten Messer.

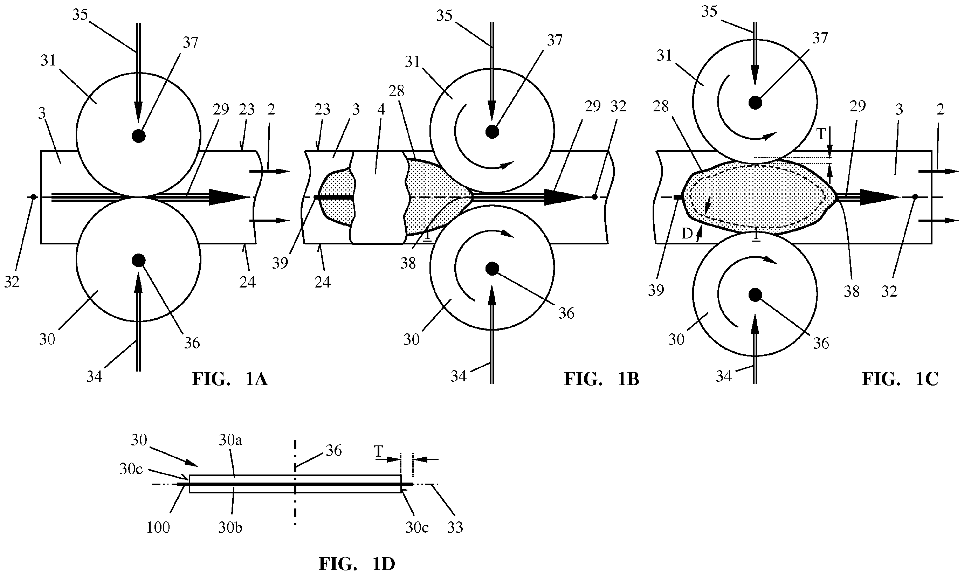

Das Verfahren zum Öffnen von ganzen Kakaofrüchten zum Ernten der in den Außenschalen der Frucht eingeschlossenen Kakaobohnen wird nachfolgend anhand der schematischen Figuren 1 bis 5 näher erläutert.

Wie Fig. 1 zeigt, sind die durch das Verfahren mechanisch zu öffnenden Kakaofrüchte 1 in der Form oval bis zylindrisch und etwa 10 cm bis 30 cm lang. Ihr Gewicht liegt zwischen 300 g und 800 g. Die Außenschale der Kakaofrucht ist dick, ledrig und äußerst hart. Im Inneren der Kakaofrucht befinden sich etwa 30 bis 60 Kakaobohnen, die in fünf Längsreihen angeordnet sind. Diese Kakaobohnen sind 2 cm bis 4 cm lang und etwa 1,2 cm bis 2 cm breit sowie in der Form oval oder elliptisch. Die Kakaobohnen sind umgeben von einer dünnen, weißlichen Schicht Fruchtfleisch, wobei die Kakaobohnen an einer strangartigen Plazenta gehalten sind, die während dem Wachstum der Frucht die Nahrungsversorgung der Kakaobohnen sicherstellt.

Um die Kakaofrüchte zum Ernten der in den Außenschalen der Frucht eingeschlossenen Kakaobohnen mechanisch zu öffnen, ist nach Fig. 1A eine Vorrichtung vorgesehen, die aus einem in Förderrichtung 2 bewegten Förderband 3 besteht, auf dessen Längsseiten 23 und 24 je ein Messer 30 und 31 angeordnet ist. Die Messer 30, 31 sind vorzugsweise als Rotationsmesser ausgebildet und drehen um Rotationsachsen 36 und 37. Wie die Kraftpfeile 34 und 35 anzeigen, sind die Messer 30, 31 kraftbelastet. Zweckmäßig erfolgt dies durch eine Feder oder ein Federpaket. In ihrer in Fig. 1A gezeigten Ruhestellung ragen die Messer 30, 31 mit ihrem Messerrand in Draufsicht bis zur Längsmittelachse 32 des Förderbandes 3 ein und liegen oberhalb des Förderbandes 3. Im Ausführungsbeispiel nach Fig. 1A liegen die Schneiden der Messer 30 und 31 mit geringem Abstand voneinander; die Schneiden berühren sich nicht.

Ein schematischer Aufbau eines Messers ist am Bespiel des Messers 30 in Fig. 1D wiedergegeben. Das insbesondere als Rotationsmesser ausgebildete Messer 30 besteht aus einer scheibenförmigen Klinge 100, die zwischen zwei Zylinderscheiben 30a, 30b vorzugsweise gleichen Durchmessers gehalten ist. Die Schnitttiefe T der Klinge 100 bzw. des Messers 30 ist bestimmt durch den Überstand der Klinge 100 über den Durchmesser der Zylinderscheiben 30a, 30b. Der Umfang 30c der Zylinderscheiben 30a, 30b stützt sich beim Schnitt auf der Außenschale 28 der Kakaofrucht 1 ab; durch Einstellen des Überstandes der Klinge 100 über den Umfang 30 c wird die Schnitttiefe T konstruktiv vorgegeben. Hierzu können Zylinderscheiben 30a, 30b unterschiedlicher Durchmesser montiert werden und/oder eine Klinge 100 mit einem anderen Außendurchmesser.

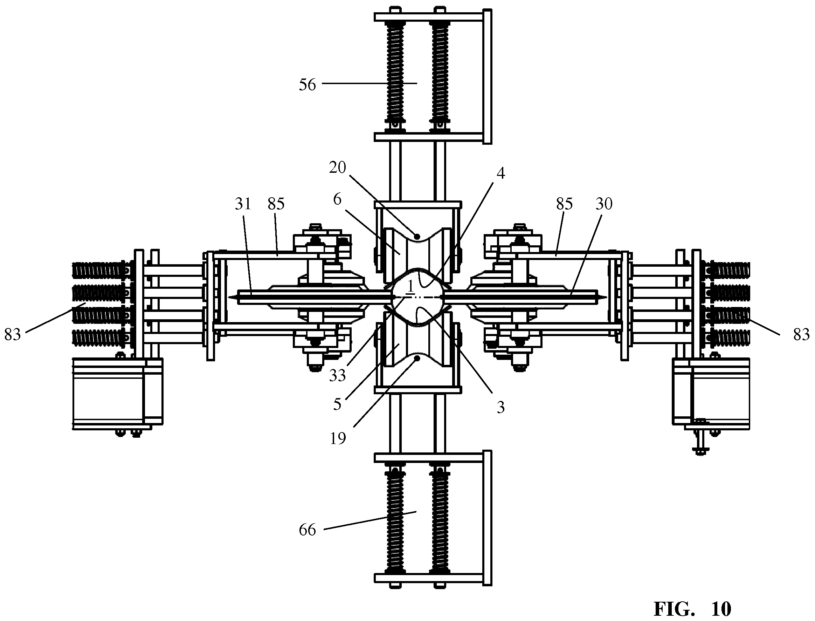

Die durch die Rotationsmesser gebildete Schnittebene 33 (Fig. 1D, 10) liegt etwa parallel zum Förderweg 29 des Förderbandes 3. Zum mechanischen Öffnen der Kakao früchte wird die Kakaofrucht 1 auf dem Förderband 3 in ihrer Längsrichtung ausgerichtet. Die Längsrichtung der Kakaofrucht 1 erstreckt sich - wie in Fig. 1B gezeigt - von ihrer Spitze 38 zum Stengelansatz 39 oder vom Stengelansatz 39 zur Spitze 38. Die Längsrichtung der Kakaofrucht 1 und die Förderrichtung 2 des Förderbandes 3 fallen zusammen; der Förderweg 29 verläuft in Längsrichtung der Kakaofrucht 1.

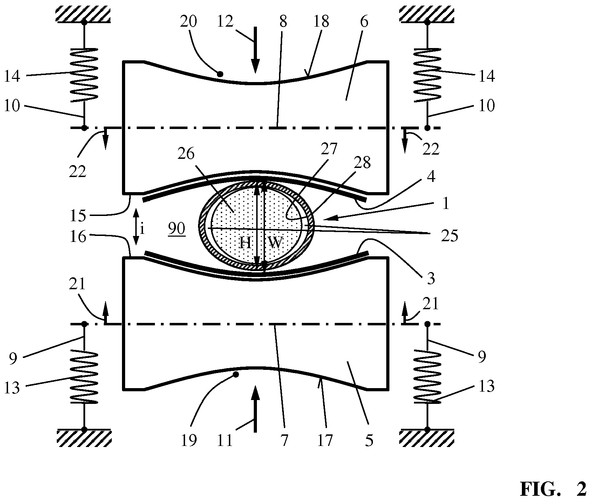

Wie in Fig. 2 schematisch dargestellt, wird die Kakaofrucht 1 auf dem Förderband 3 in ihrer in Längsrichtung ausgerichteten Lage gehalten, wozu ein oberes Förderband 4 vorgesehen ist. Im gezeigten Ausführungsbeispiel werden das untere Förderband 3 und das obere Förderband 4 mittels Transportrollen 5 und 6 geführt, wobei die Achsen 7 und 8 der Transportrollen 5 und 6 an ihren Enden in Trägern 9, 10 gehalten sind. Die Träger 9, 10 sind in Richtung der Pfeilrichtungen 11 und 12 mit einer Kraft beaufschlagt, wodurch die Transportrollen 5 und 6 in Richtung der Wegpfeile 21 und 22 kraftbelastet sind. Im Ausführungsbeispiel nach Fig. 2 greifen an den Trägern 9, 10 Schraubenfedern 13 und 14 an. Die Auslegung der Schraubenfedern 13 und 14 ist derart vorgesehen, dass im mäßig gespannten oder entspannten Zustand der Schraubenfedern 13 und 14 die Transportrollen 5, 6 mit ihren zylindrischen Endabschnitten 15, 16 mit Abstand i zueinander liegen und einen Aufnahmespalt 90 begrenzen. Der Aufnahmespalt 90 ist zwischen den Endabschnitten 15, 16 bauchig erweitert, wozu im gezeigten Ausführungsbeispiel nach Fig. 2 die sich zwischen den zylindrischen Endabschnitten 15 und 16 erstreckende Mantelflächen 17 und 18 der Transportrollen 5, 6 als konkave, insbesondere einschalige hyperboloide Mantelfläche ausgebildet sind. Durch diese Gestalt der Transportrollen 5, 6 wird erreicht, dass in einer Transportrolle 5, 6 je ein Teilaufnahmeraum 19, 20 für eine Kakaofrucht 1 geschaffen ist.

Eine zwischen dem unteren Förderband 3 und dem oberen Förderband 4 eintretende Kakaofrucht 1 drängt die Transportrollen 5, 6 gegen die Federkraft der Schraubenfedern 13, 14 auseinander, so dass die Kakaofrucht 1 zwischen den Transportrollen 5 und 6 gehalten ist, insbesondere mechanisch lagefixiert ist. Dabei liegt die Kakaofrucht 1 teilweise in den Teilaufnahmeräumen 19 und 20 der Transportrollen 5 und 6. Die Teilaufnahmeräume 19 und 20 stellen sicher, dass beim Transport der Kakaofrucht 1 in Förderrichtung 2 diese nicht nach links oder rechts von dem Förderweg abweichen kann. Die Transportrollen 5, 6 und 61 bzw. die in den Transportrollen 5, 6, 61 vorgesehenen Vertiefungen sind für den Transport der Kakaofrüchte 1 wesentlich, da sie einerseits den Halt der Kakaofrucht 1 auf dem Förderband 3 gewährleisten und andererseits die Öffnungsweite W (Fig. 2) zwischen den Förderbändern 3, 4 für den Schnitt bestimmen. Eine zweckmäßige Auslegung der Öffnungsweite W ist so gewählt, dass Fruchtgrößen von etwa 60 mm bis 150 mm Durchmesser sicher in der Vorrichtung ausgerichtet, geschnitten und geöffnet werden können. Bei abweichenden Durchmessern können die Transportrollen 5, 6, 61 bzw. darin ausgebildete Vertiefungen entsprechend angepasst werden, so dass auch Kakaofrüchte mit kleinerem oder größerem Durchmesser mit der Vorrichtung verarbeitet werden können.

Die Kakaofrucht 1 wird über die Förderbänder 3 und 4 zwischen die Transportrollen 5 und 6 gezwängt, wodurch die Transportrollen 5 und 6 gegen die Richtung der Wegpfeile 21 und 22 gegen die Kraft der Schraubenfedern 13 und 14 verschoben werden. Die Federkraft der Schraubenfedern 13 und 14 bedingt ein geklemmtes Halten der Kakaofrucht 1 zwischen den Förderbändern 3 und 4, so dass die Kakaofrucht 1 mechanisch fixiert längs des Förderweges 29 in Förderrichtung 2 des Förderbandes 3 (Fig. 1B, C) bewegt wird.

Die zwischen den Förderbändern 3 und 4 und den Transportrollen 5 und 6 in ihrer ausgerichteten Längsrichtung geklemmt gehaltene Kakaofrucht 1 wird in dieser Lage längs des Förderweges 29 an einem Messer 30 vorbeigeführt. In Fig. 1B sind auf beiden Längsseiten 23 und 24 des Förderweges Messer 30 und 31 angeordnet. Wie Fig. 1A zeigt, liegen die Messer 30 und 31 in einer gemeinsamen Schnittebene 33 (Fig. 10), wobei die Messer in Richtung der Kraftpfeile 34 und 35 zur Längsmittelachse 32 kraftbeaufschlagt sind.

Die in den Figuren 1A bis 1C dargestellten Messer 30 und 31 sind Rotationsmesser, insbesondere nicht angetriebene Rotationsmesser. Die Rotationsachsen 36 und 37 der Rotationsmesser sind - wie mit den Kraftpfeilen 34 und 35 angedeutet - kraftbelastet und ragen in den Aufnahmespalt 90 (Fig. 2) zwischen die Förderbänder 3 und 4 ein; die Messer 30, 31 werden mit einer einstellbaren Kraft an die Außenschale 28 der Kakaofrucht 1 angedrückt.

Eine in Förderrichtung 2 auf die Messer 30 und 31 zugeführte Kakaofrucht 1 drängt die Messer 30 und 31 auseinander, wie schematisch in Fig. 1B dargestellt. Aufgrund der Bewegung der Kakaofrucht 1 längs des Förderwegs 29 in Förderrichtung 2 werden die unter einer Andrückkraft an die Außenschale 28 der Kakaofrucht 1 angepressten Messer rotierend angetrieben und schneiden in die dicke, ledrige Außenschale 28 der Kakaofrucht ein. Der Schnitt erfolgt in Längsrichtung der Kakaofrucht 1 von deren Spitze 38 zu deren Stengelansatz 39, wie in Fig. 1 B und C dargestellt. Liegt die Kakaofrucht 1 in Längsrichtung gedreht, wird sie vom Stengelansatz zur Spitze geschnitten.

Da die Rotationsmesser federnd an die Kakaofrucht angedrückt werden, kann durch Einstellen der Federkraft die Schnitttiefe eingestellt werden. Die Schnitttiefe T (Fig. 1C) in die Außenschale 28 ist zweckmäßig so gewählt, dass die Messer 30, 31 um mehr als die Hälfte der Dicke D (Fig. 1C) in die Außenschale 28 eindringen. Die Schnitttiefe T wird vorzugsweise derart eingestellt, dass die Schnitttiefe T über die Länge eines Schnittes vorzugsweise geringer ist als die maximale Dicke D der Außenschale 28.

Die Schraubenfedern 13 und 14 bringen auf die Kakaofrucht 1 in Pfeilrichtung 11, 12 eine Druckkraft auf, die - durch Einstellung der Druckkraft - eine Verformung der Kakaofrucht 1 bewirkt, wie dies in Fig. 2 dargestellt ist. Die Druckkraft ist derart eingestellt, dass sich die Kakaofrucht 1 verformt. Die Druckkraft wird so eingestellt, dass sich die Außenschale 28 der Kakaofrucht 1 von dem inneren Fruchtmark 26, nämlich der Pulpa mit den Kakaobohnen, ablöst. Zwischen der Innenseite 27 der Außenschale 28 und dem Fruchtmark 26 (Pulpa mit den Kakaobohnen) bildet sich ein Hohlraum 25 aus. Die auf die Kakaofrucht 1 ausgeübte Druckkraft steht senkrecht zu der Schnittebene 33 der Messer 30, 31, so dass sich auf beiden Seiten des Fruchtmarks 26 jeweils ein Hohlraum 25 in der Ebene der Messer 30, 31 ausbildet. So ist gewährleistet, dass bei einem zu tiefen Einschneiden eines Messers 30, 31 dieses auf den Hohlraum 25 trifft und nicht in die Frucht 26 selbst eindringt. Es können keine Kakaobohnen durch das Messer 30, 31 verletzt werden. Durch die Bildung des Hohlraums 25 in der Schnittebene 33 durch Aufbringen einer Druckkraft auf die Kakaofrucht 1 senkrecht zur Schnittebene 33 wird ein sicheres Öffnen der Kakaofrucht 1 ohne Verletzung der in der Pulpa liegenden Kakaobohnen erzielt.

Ist die Kakaofrucht 1 in Längsrichtung durch die Messer 30 und 31 geschnitten oder angeschnitten, kann die geschnittene Kakaofrucht leicht aufgebrochen und die aufgebrochene Kakaofrucht aus der Vorrichtung abgeworfen werden.

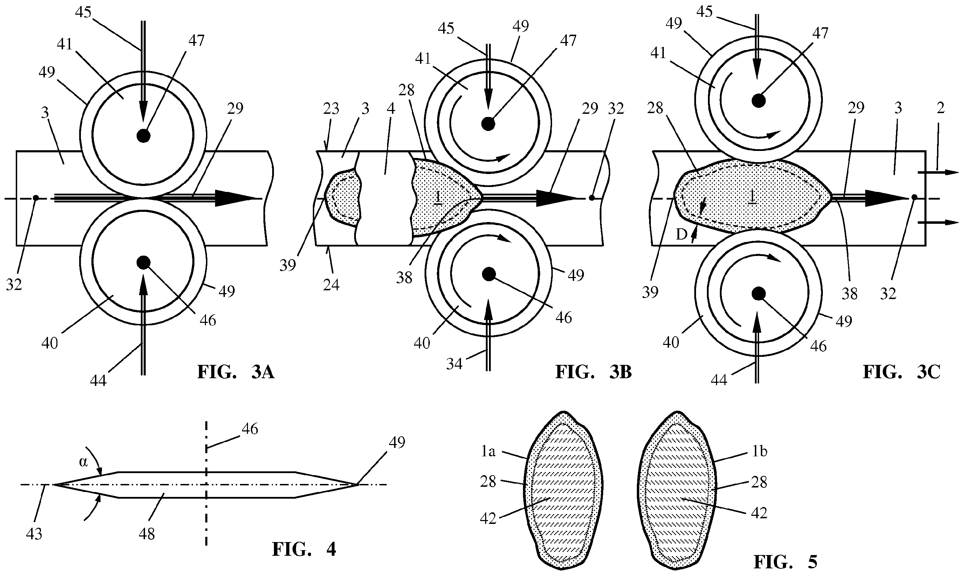

Vorteilhaft werden zum Öffnen oder Aufbrechen der geschnittenen Kakaofrucht 1 längs des Förderweges 29 Keilelemente 40, 41 vorgesehen, welche in die Schnittfuge der Messer 30, 31 eingreifen und die Kakaofrucht 1 öffnen und/oder aufbrechen. Fig. 3A zeigt die Anordnung von einem Keilelement 40 bzw. 41 an einem Förderband 3, wobei vorteilhaft auf beiden Längsseiten 23, 24 des Förderbandes 3 Keilelemente 40 und 41 angeordnet sind. Die Keilelemente 40 und 41 bilden eine gemeinsame Keilebene 43

(Fig. 4) und sind als rotierende Keilelemente 40, 41 ausgebildet, die um Rotationsachsen 46 und 47 drehen. Die Keilelemente sind - wie Fig. 4 zeigt - Tellerscheiben 48 mit einem keilförmigen Rand 49, wobei der keilförmige Rand 49 die Keilebene 43 bestimmt. Die scheibenförmigen Keilelemente 40 und 41 rotieren um die Rotationsachsen 46 und 47, wobei die Rotationsachsen 46 und 47 entsprechend den Kraftpfeilen 44 und 45 in Richtung auf den Aufnahmespalt 90 (Fig. 2) kraftbeaufschlagt sind. Die Auslegung ist so vorgesehen, dass - wie die Darstellung in Fig. 3A zeigt - die Keilelemente 40, 41 in Draufsicht gesehen bis an die Längsmittelachse 32 des Förderbandes 3 in den Aufnahmespalt 90 einragen, vorzugsweise die Ränder 49 der Keilelemente 40 und 41 einander aber nicht berühren.

Die Keilelemente 40, 41 haben keinen eigenen Antrieb; sie werden durch die zwischen den Keilelementen längs des Förderwegs 29 transportierte Kakaofrucht 1 drehend mitgenommen.

Die Keilebene 43 liegt auf der Höhe der Schnittebene 33, so dass sich der Rand 49 in die Schnittfuge der geschnittenen Kakaofrucht 1 zwängt und aufgrund der keilförmigen Gestaltung eine Öffnungs- oder Aufbrechkraft ausübt. Durch eine Gestaltung des Keilwinkels α (Fig. 4) und der Andrückkraft in Richtung der Kraftpfeile 44 und 45 kann die Öffnungs- oder Aufbrechkraft eingestellt werden.

Wie Fig. 3B zeigt, wird die geschnittene und weiterhin zwischen den Förderbändern 3 und 4 fixiert gehaltene Kakaofrucht 1 längs des Förderweges 29 zwischen die Keilelemente 40 und 41 gefördert, wobei der Rand 49 in die Schnittfuge eingreift und die Kakaofrucht 1 längs der Schnittfuge öffnet oder aufbricht. Das Abheben der unteren Hälfte der Kakaofrucht von der oberen Hälfte der Kakaofrucht erfolgt längs der Schnittfuge kontinuierlich, wobei - vgl. Fig. 3C - die Keilelemente 40 und 41 tiefer in die Kakaofrucht eindringen können als die Messer 30, 31.

Nach Durchlaufen der Keilelemente 40, 41 wird die Kakaofrucht 1 abgeworfen; die Kakaofrucht 1 ist in zwei Hälften 1a, 1b aufgebrochen, wie sie in Fig. 5 schematisch dargestellt sind. Die in einem Fruchtfleisch 42 eingelagerten Kakaobohnen können entnommen und von der Außenschale 28 der Kakaofrucht 1 getrennt werden.

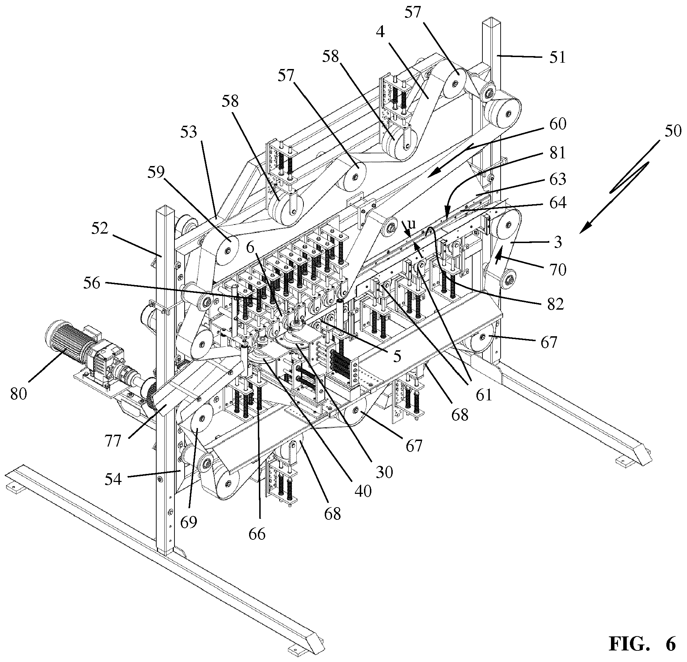

Ein Ausführungsbeispiel einer Vorrichtung zur Durchführung des in den Figuren 1 bis 5 dargestellten und vorstehend beschriebenen Verfahrens ist in den Figuren 6 bis 10 gezeigt.

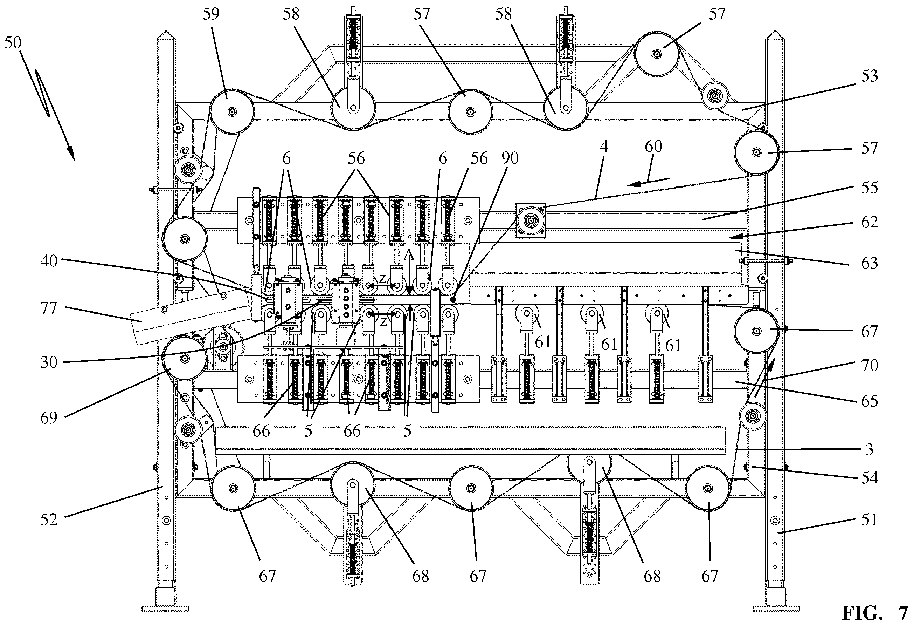

Die Vorrichtung besteht im Wesentlichen aus einem Gestellrahmen 50, der aus zwei Ständern 51 und 52 besteht, die einen Oberrahmen 53 und einen Unterrahmen 54 tragen. Der Oberrahmen 53 hat in Seitenansicht nach Fig. 7 im Wesentlichen U-förmige Gestalt, wobei zwischen den beiden Schenkeln eine Traverse 55 vorgesehen ist, die im Wesentlichen als Träger für den Kraftspeicher 56 und die Transportrollen 6 für das obere Förderband 4 dient. Im Ausführungsbeispiel nach den Figuren 6 bis 10 sind acht Transportrollen 6 vorgesehen, denen am Unterrahmen 54 gegenüberliegend Transportrollen 5 für das untere Förderband 3 zugeordnet sind. Jeweils eine Transportrolle 5 und eine Transportrolle 6 liegen - wie insbesondere Fig. 10 zeigt - einander unmittelbar gegenüber; in Seitenansicht gemäß Fig. 7 liegen die Achsen 7 und 8 der Transportrollen 5 und 6 auf einer gemeinsamen Vertikalen, die vorzugsweise parallel zu den Ständern 51 und 52 liegt.

Das obere Förderband 4 ist als umlaufendes Förderband ausgebildet und mit einer Vielzahl von Umlenkrollen 57 am Oberrahmen 53 geführt. Zwei Spannrollen 58 gewährleisten die notwendige Straffung des Förderbandes 3; über ein Antriebsrad 59 ist das obere Förderband 4 angetrieben. In Laufrichtung 60 des Förderbandes 4 wird dieses erst im Bereich der in Laufrichtung 60 ersten Transportrolle 6 in Richtung auf das untere Förderband 3 geführt und bildet zusammen mit diesem einen Aufnahmespalt 90 für eine zu öffnende Kakaofrucht 1.

Das untere Förderband 3 ist entsprechend dem oberen Förderband 4 über mehrere Umlenkrollen 67 als endloses Förderband geführt, wobei Spannrollen 68 für die notwendige Gurtstraffung vorgesehen sind. Über eine Antriebsrolle 69 wird das untere Förderband 3 in Laufrichtung 70 angetrieben. Die Laufrichtung 70 und die Laufrichtung 60 sind gleich.

Der etwa U-förmige Unterrahmen 54 trägt zwischen seinen Schenkeln eine Traverse 65, die zur Halterung der Kraftspeicher 66 und der Transportrollen 5 dient. Die Transportrollen 5 liegen den Transportrollen 6 genau gegenüber; zwischen den Transportrollen verbleibt ein Aufnahmespalt 90 mit einem Abstand A, in den die Messer 30, 31 und die Keilelemente 40, 41 einragen.

Ein Messer 30, 31 ist an einem insbesondere U-förmigen Träger 85 gehalten, der über eine Stütze 87, 88 am Ständer 50 montiert ist. Die Stütze 87, 88 ist Halter für einen Kraftspeicher 83, der den Träger 85 kraftbeaufschlagt. Im Ausführungsbeispiel ist der Kraftspeicher 83 als Federpaket ausgebildet. Die Ausgangskraft des Kraftspeichers 83 ist einstellbar, so dass die Andrückkraft der Messer 30, 31 einstellbar ist. Die Messer 30, 31 ragen seitlich in den Aufnahmespalt 90 ein und erstrecken sich vorteilhaft bis an die Mitte des Förderbandes 3.

In gleicher Weise sind die Keilelemente 40, 41 gehalten. Jedes Keilelement 40, 41 ist an einem insbesondere U-förmigen Träger 86 gehalten, der über eine Stütze 87, 88 am Ständer 50 montiert ist. Die Stütze 87, 88 ist Halter für einen Kraftspeicher 84, der den Träger 86 kraftbeaufschlagt. Im Ausführungsbeispiel ist der Kraftspeicher 84 als Federpaket ausgebildet. Die Ausgangskraft des Kraftspeichers 84 ist einstellbar, so dass die Andrückkraft der Keilelemente 40, 41 einstellbar ist. Dadurch lässt sich auch die an der Kakaofrucht wirkende Aufbrechkraft einstellen. Keilelemente 40, 41 ragen seitlich in den Aufnahmespalt 90 ein und erstrecken sich vorteilhaft bis an die Mitte des Förderbandes 3.

In Laufrichtung 60, 70 nach den Keilelementen 40, 41 laufen die Förderbänder 3 und 4 trichterförmig auseinander und geben die geschnittene und aufgebrochene Kakaofrucht 1 frei, die über einen rutschenförmigen Abwurf 77 abgeworfen wird.

In Laufrichtung 70 vor den klemmenden Transportrollen 5 sind Tragrollen 61 vorgesehen, die das Förderband 3 im Bereich einer Schütte 62 abstützen und führen. Wie aus der perspektivischen Darstellung in Fig. 6 ersichtlich, besteht die Schütte im Wesentlichen aus zwei trichterförmig öffnenden Schüttblechen 63, die auf je einer Längsseite 23, 24 des Förderbandes 3 verlaufen, wobei das Förderband 3 unterhalb einer Abzugsöffnung 81 der Schütte 62 läuft. Am unteren, dem Förderband 3 benachbarten Rand der Schüttbleche 63 sind Richtleisten 64 vorgesehen, die sich oberhalb des Förderbandes 3 erstrecken und die als Längsöffnung 82 ausgebildete Abzugsöffnung 81 begrenzen. Die Richtleisten 64 dienen zur Ausrichtung der Kakaofrüchte in Längsrichtung und können bei Verschleiß einfach ausgetauscht werden.

In Laufrichtung 70 am Ende der Richtleisten 64 läuft das obere Förderband 4 auf das untere Förderband 3 zu und bildet mit diesem den Aufnahmespalt 90. Auch die Transportrollen 61 im Bereich der Abzugsöffnung 81 sind vorzugsweise mit einer konkaven, insbesondere hyperboloiden Mantelfläche ausgebildet, wodurch eine Teilaufnahme für eine auszurichtende Kakaofrucht gebildet ist. Die Teilausnehmung unterstützt die Ausrichtung der Kakaofrucht in ihre Längsrichtung. Die von den Richtleisten 64 unter Einfluss der Förderbewegung des Förderbandes 3 und/oder der konkaven, insbesondere hyperboloiden Mantelfläche der Transportrollen 61 sich ausrichtenden Kakaofrüchte werden mit Einlaufen in den Aufnahmespalt 90 in ihrer Lage fixiert und zwischen den Transportrollen 5 und 6 in Richtung des Förderweges 29 transportiert. In dieser fixierten, ausgerichteten Lage durchläuft eine Kakaofrucht die klemmenden Transportrollen 5 und 6, wird durch die Messer 30, 31 geschnitten, durch die Keilelemente 40 und 41 aufgebrochen und/oder geöffnet und über den Abwurf 77 abgeworfen.

In Förderrichtung 2 ist zwischen klemmenden, benachbarten oberen Transportrollen 6 in Förderrichtung ein Abstand z vorgesehen. Ein gleicher in Förderrichtung gemessener Abstand z ist zwischen klemmenden, benachbarten unteren Transportrollen 5 ausgebildet. Der Abstand z ist so bemessen, dass eine zwischen gegenüberliegenden Transportrollen 5 und 6 geklemmte Kakaofrucht 1 in ihrer geklemmten Lage von dem einen in Förderrichtung folgenden Paar klemmender Transportrollen 5 und 6 übernommen wird. Der Abstand z ist kleiner als die Länge einer Kakaofrucht 1, insbesondere beträgt der Abstand z 5 cm bis 15 cm.

Durch Höhenverstellung des Unterrahmens 54 zum Oberrahmen 53 kann in einfacher Weise die Höhe des Aufnahmespaltes 90 eingestellt werden, also der Abstand A (Fig.7) zwischen den Förderbändern 3 und 4 im Bereich der Transportrollen 5 und 6 eingestellt werden, um so die Vorrichtung für verschiedene Dicken der Kakaofrüchte anzupassen.

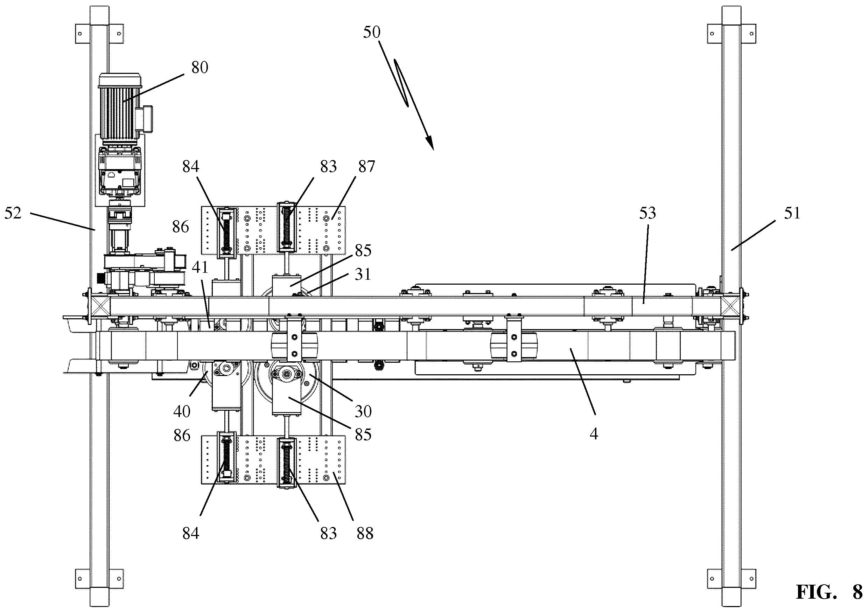

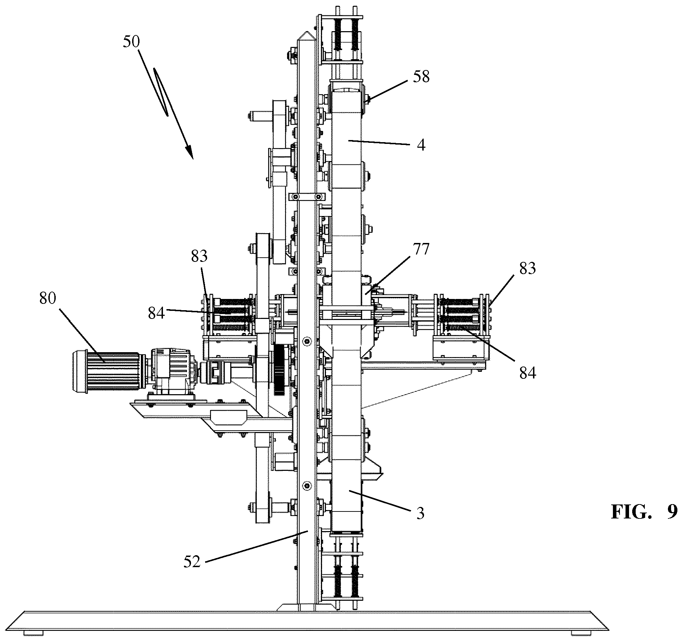

Wie die Figuren 8 und 9 zeigen, ist an der Vorrichtung lediglich ein Antriebsmotor 80 angeordnet, der die Antriebsrollen 59 und 69 antreibt und damit die Förderbänder 3 und 4 bewegt. Dabei wird die Antriebsrolle 69 des unteren Förderbandes 3 über einen Zahnradantrieb ausgeführt; die Antriebsrolle 59 des oberen Förderbandes 4 erfolgt über einen Riementrieb.

Sowohl für die Spannrollen als auch für die Messer und Keilelemente können Kraftspeicher beliebiger Form verwendet werden; im Ausführungsbeispiel sind Kraftspeicher in Form von Federn vorgesehen; zweckmäßig in Form von Schraubenfedern. Dabei können vorteilhaft mehrere Schraubenfedern parallel geschaltet sein.

Die aufgebrochenen und/oder geöffneten Kakaofrüchte werden auf einen Rüttler abgeworfen, der beispielsweise aus einem Stangenrost und einem Gitterrost bestehen kann. Der Stangenrost liegt oberhalb des Gitterrostes, der über einen Rüttelantrieb den Rost in eine Hin- und Her-Bewegung versetzt.

Der Stangenrost dient als erste Ablage für die aus dem Abwurf der Vorrichtung abgeworfenen geöffneten Kakaofrüchte. Durch die Rüttelbewegung werden die Außenschalen der Kakaofrüchte von den Kakaobohnen und dem Fruchtfleisch getrennt. Die Kakaobohnen fallen mit dem Fruchtfleisch durch das Stangenrost nach unten auf den Gitterrost. Die Außenschalen der Kakaofrüchte werden zurückgehalten und einer weiteren Verwendung zugeführt.

Die mit dem Fruchtfleisch durch das Stangenrost nach unten auf das Gitterrost fallenden Kakaobohnen werden durch die Bewegung des Gitterrostes von der strangförmigen Plazenta getrennt und vereinzelt, so dass sie durch das Gitterrost nach unten fallen und zur weiteren Verarbeitung aufgenommen werden.

## Patentansprüche

1. Verfahren zum Öffnen von Kakaofrüchten zum Ernten der in den Außenschalen der Kakaofrucht eingeschlossenen Kakaobohnen, bestehend aus den folgenden Verfahrensschritten:
• die Kakaofrucht (1) wird auf einem Förderband (3) in Förderrichtung in ihrer Längsrichtung ausgerichtet;
• die Kakaofrucht (1) wird auf dem Förderband (3) in ihrer in Förderrichtung ausgerichteten Längsrichtung gehalten;
• auf die Kakaofrucht (1) wird eine Druckkraft aufgebracht, die zu einer Verformung der Kakaofrucht (1) führt;
• die auf dem Förderband (3) gehaltene, verformte Kakaofrucht (1) wird längs eines Förderweges (29) an einem Messer (30, 31) vorbeigeführt;
• das Messer (30, 31) schneidet in die Außenschale (28) der Kakaofrucht (1) ein,
• die Schnitttiefe (T) des Messers (30, 31) in die Außenschale (28) ist größer als die Hälfte der Dicke (D) der Außenschale (28),
• die geschnittene Kakaofrucht (1) wird aufgebrochen,
• die aufgebrochene Kakaofrucht (1) wird geöffnet abgeworfen.

2. Verfahren nach Anspruch 1,
**dadurch gekennzeichnet, dass** die Druckkraft senkrecht zur Schnittebene (33) der Messer (30, 31) aufgebracht wird.

3. Verfahren nach Anspruch 1,
**dadurch gekennzeichnet, dass** die Größe der Druckkraft derart eingestellt ist, dass sich in der Schnittebene (33) zwischen der Innenseite (27) der Außenschale (28) und dem Fruchtmark (26) ein Hohlraum (25) ausbildet.

4. Verfahren nach Anspruch 1,
**dadurch gekennzeichnet, dass** die Schnitttiefe (T) des Messers (30, 31) in die Außenschale (28) geringer ist als die maximale Dicke (D) der Außenschale (28).

5. Verfahren nach Anspruch 1,
**dadurch gekennzeichnet, dass** die geschnittene Kakaofrucht (1) längs des Förderweges (29) an einem Keilelement (40, 41) vorbeigeführt wird, welches in die Schnittfuge des Messers (30, 31) eingreift und die Kakaofrucht (1) aufbricht.

6. Verfahren nach einem der Ansprüche 1 bis 5,
**dadurch gekennzeichnet, dass** die in Längsrichtung ausgerichtete Kakaofrucht (1) zwischen zwei Förderbändern (3, 4) fixiert wird und mittels der Förderbänder (3, 4) in fixierter Stellung in Förderrichtung (2) bewegt wird.

7. Verfahren nach Anspruch 6,
**dadurch gekennzeichnet, dass** die Kontur der Kakaofrucht (1) in einem zwischen den Förderbändern (3, 4) gebildeten Aufnahmespalt (90) gehalten ist.

8. Verfahren nach Anspruch 7,
**dadurch gekennzeichnet, dass** der Aufnahmespalt (90) durch eine Vertiefung in Transportrollen (5, 6) ergänzt ist, die das Förderband (3, 4) führen.

9. Verfahren nach Anspruch 1,
**dadurch gekennzeichnet, dass** das Messer (30, 31) die Kakaofrucht (1) in Längsrichtung von der Spitze (38) zum Stengelansatz (39) oder vom Stengelansatz (39) zur Spitze (38) schneidet.

10. Verfahren nach Anspruch 1,
**dadurch gekennzeichnet, dass** das Messer (30, 31) an die Außenschale (28) der Kakaofrucht (1) angedrückt wird, insbesondere federnd angedrückt wird.

11. Verfahren nach Anspruch 10,
**dadurch gekennzeichnet, dass** das an die Kakaofrucht (1) angedrückte Messer (30, 31) von der in Förderrichtung (2) bewegten Kakaofrucht (1) rotierend angetrieben ist.

12. Verfahren nach Anspruch 1,
**dadurch gekennzeichnet, dass** die Kakaofrucht (1) zwischen zwei auf beiden Längsseiten (23, 24) des Förderbandes (3, 4) liegenden Messern (30, 31) hindurchgeführt wird, die die Kakaofrucht (1) zeitweise gleichzeitig schneiden.

13. Verfahren nach Anspruch 5,
**dadurch gekennzeichnet, dass** das Keilelement (40, 41) in die Schnittfuge des Messers (30, 31) in der Außenschale (28) der Kakaofrucht (1) gedrückt wird, insbesondere federnd eingedrückt wird.

14. Verfahren nach Anspruch 13,
**dadurch gekennzeichnet, dass** das an die Kakaofrucht (1) angedrückte Keilelement (40, 41) von der in ihrer Förderrichtung (2) bewegten Kakaofrucht (1) rotierend angetrieben ist.

15. Verfahren nach Anspruch 5,
**dadurch gekennzeichnet, dass** die Kakaofrucht (1) zwischen zwei auf beiden Längsseiten (23, 24) des Förderbandes (3, 4) liegenden Keilelementen (40, 41) hindurchgeführt wird, die zumindest zeitweise gleichzeitig in die Schnittfugen der Kakaofrucht (1) eindringen.

16. Vorrichtung zum Ernten von Kakaobohnen, die in einer Außenschale (28) einer Kakaofrucht (1) eingeschlossen sind, mit einer Schütte (62) zum Aufgeben von Kakaofrüchten (1) auf ein erstes Förderband (3), das unter einer Abzugsöffnung (81) der Schütte (62) in Förderrichtung (2) durchläuft, und mit einem zweiten Förderband (4), welches in Förderrichtung (2) nach der Schütte (62) oberhalb des ersten Förderbandes (3) verläuft, wobei zumindest einige Transportrollen (5, 6) der Förderbänder (3, 4) federnd gelagert sind, und zwischen den Transportrollen (3, 4) und den von ihnen geführten Förderbändern (3, 4) ein Aufhahmespalt (90) zur klemmenden Fixierung einer Kakaofrucht (1) begrenzt ist, wobei zwischen der Schütte (62) und einem Abwurf (77) der Förderbänder (3, 4) mindestens ein Messer (30, 31) und mindestens ein auf die Schnittebene (33) ausgerichtetes Keilelement (40, 41) vorgesehen sind, welche in den Aufnahmespalt (90) einragen.

17. Vorrichtung nach Anspruch 16,
**dadurch gekennzeichnet, dass** das Messer (30, 31) ein Rotationsmesser ist, welches frei rotierend gelagert ist.

18. Vorrichtung nach Anspruch 17,
**dadurch gekennzeichnet, dass** das Rotationsmesser an einem Träger (85) gehalten ist, der in Richtung in den Aufnahmespalt (90) kraftbelastet ist.

19. Vorrichtung nach Anspruch 16,
**dadurch gekennzeichnet, dass** auf beiden Längsseiten (23, 24) der Förderbänder (3, 4) zumindest je ein Messer (30, 31) angeordnet ist, und die Messer (30, 31) eine gemeinsame Schnittebene (33) bestimmen.

20. Vorrichtung nach Anspruch 19,
**dadurch gekennzeichnet, dass** sich die Schnittebene (33) zwischen den Förderbändern (3, 4) erstreckt.

21. Vorrichtung nach Anspruch 16,
**dadurch gekennzeichnet, dass** das Keilelement (40, 41) ein Rotationselement ist, welches auf Höhe des Messers (30, 31) angeordnet ist und frei rotierend gelagert ist.

22. Vorrichtung nach Anspruch 21,
**dadurch gekennzeichnet, dass** das Keilelement (40, 41) an einem Träger (86) gehalten ist, der in Richtung in den Aufnahmespalt (90) kraftbelastet ist.

23. Vorrichtung nach Anspruch 21,
**dadurch gekennzeichnet, dass** auf beiden Längsseiten (23, 24) der Förderbänder (3, 4) zumindest je ein Keilelement (40, 41) angeordnet ist, und die Keilelemente (40, 41) eine vorzugsweise gemeinsame Keilebene (43) bestimmen.

24. Vorrichtung nach Anspruch 16,
**dadurch gekennzeichnet, dass** die Transportrollen (5, 6) eine einschalige hyperboloide Mantelfläche (17, 18) aufweisen.

25. Vorrichtung nach Anspruch 24,
**dadurch gekennzeichnet, dass** die Mantelfläche (17, 18) der Transportrollen (5, 6) einen Teilaufnahmeraum (19, 20) ausbildet, der die Kakaofrucht (1) über einen Teil ihres Umfangs aufnimmt.

26. Vorrichtung nach Anspruch 16,
**dadurch gekennzeichnet, dass** sich die Abzugsöffnung (81) der Schütte (62) als Längsöffnung (82) in Förderrichtung (2) des Förderbandes (3) erstreckt.

27. Vorrichtung nach Anspruch 26,
**dadurch gekennzeichnet, dass** die Abzugsöffnung (81) durch zwei Richtleisten (64) begrenzt ist, die sich in Richtung der Längsöffnung (82) erstrecken und quer zur Förderrichtung (2) einen Abstand (u) voneinander aufweisen.

## Claims

1. Method for opening cocoa pods to harvest the cocoa beans enclosed in the outer shells of the cocoa pod, the method comprising the following steps:
- the cocoa pod (1) is oriented in its longitudinal direction on a conveyor belt (3) in conveying direction;
- the cocoa pod (1) is held on the conveyor belt (3) with its longitudinal direction oriented in conveying direction;
- a compressive force resulting in a deformation of the cocoa pod (1) is applied to the cocoa pod (1);
- the deformed cocoa pod (1) held on the conveyor belt (3) is guided past a knife (30, 31) along a conveying path (29);
- the knife (30, 31) cuts into the outer shell (28) of the cocoa pod (1);
- the cutting depth (T) of the knife (30, 31) into the outer shell (28) is greater than half of the thickness (D) of the outer shell (28);
- the cut cocoa pod (1) is broken open;
- the broken cocoa pod (1) is ejected in its opened state.

2. Method according to claim 1,
**characterised in that** that the compressive force is applied at right angles to the cutting plane (33) of the knives (30, 31).

3. Method according to claim 1,
**characterised in that** the magnitude of the compressive force is adjusted such that a cavity (25) is formed in the cutting plane (33) between the inside (27) of the outer shell (28) and the pulp (26).

4. Method according to claim 1,
**characterised in that** the cutting depth (T) of the knife (30, 31) into the outer shell (28) is less than the maximum thickness (D) of the outer shell (28).

5. Method according to claim 1,
**characterised in that** he cut cocoa pod (1) is guided along the conveying path (29) past a wedge element (40, 41), which engages with the kerf of the knife (30, 31) and breaks the cocoa pod (1) open.

6. Method according to any of claims 1 to 5,
**characterised in that** the cocoa pod (1) oriented in the longitudinal direction is fixed between two conveyor belts (3, 4) and moved in the conveying direction (2) in the fixed position by means of the conveyor belts (3, 4).

7. Method according to claim 6,
**characterised in that** the contour of the cocoa pod (1) is held in a reception gap (90) formed between the conveyor belts (3, 4).

8. Method according to claim 7,
**characterised in that** the reception gap (90) is supplemented by a recess in conveyor rollers (5, 6) guiding the conveyor belt (3, 4).

9. Method according to claim 1,
**characterised in that** the knife (30, 31) cuts the cocoa pod (1) in the longitudinal direction from the tip (38) to the stem projection (39) or from the stem projection (39) to the tip (38).

10. Method according to claim 1,
**characterised in that** the knife (30, 31) is pressed against the outer shell (28) of the cocoa pod (1), in particular resiliently.

11. Method according to claim 10,
**characterised in that** the knife (30, 31) pressed against the cocoa pod (1) is driven to rotate by the cocoa pod (1) moved in the conveying direction (2).

12. Method according to claim 1,
**characterised in that** the cocoa pod (1) is passed between two knives (30, 31), which are located on both long sides (23, 24) of the conveyor belt (3, 4) and intermittently cut the cocoa pod (1) simultaneously.

13. Method according to claim 5,
**characterised in that** the wedge element (40, 41) is pressed into the kerf of the knife (30, 31) in the outer shell (28) of the cocoa pod (1), in particular resiliently.

14. Method according to claim 13,
**characterised in that** the wedge element (40, 41) pressed against the cocoa pod (1) is driven to rotate by the cocoa pod (1) moved in the conveying direction (2).

15. Method according to claim 5,
**characterised in that** the cocoa pod (1) is guided between two wedge element (40, 41), which are located on both long sides (23, 24) of the conveyor belt (3, 4) and at least intermittently penetrate into the kerfs of the cocoa pod (1) simultaneously.

16. Device for harvesting cocoa beans enclosed in an outer shell (28) of a cocoa pod (1), with a chute (62) for placing cocoa pods (1) on a first conveyor belt (3) running in a conveying direction (2) below an outlet (81) of the chute (62), and with a second conveyor belt (4) running in the conveying direction (2) downstream of the chute (62) above the first conveyor belt (3), wherein at least some conveyor rollers (5, 6) of the conveyor belts (3, 4) are mounted resiliently and a reception gap (90) for clamping a cocoa pod (1) is bounded by the conveyor rollers (5, 6) and the conveyor belts (3, 4) guided by the former, wherein between the chute (62) and a delivery end (77) of the conveyor belts (3, 4) there are provided at least one knife (30, 31) and at least one wedge element (40, 41) aligned to the cutting plane (33), which project into the reception gap (90).

17. Device according to claim 16,
**characterised in that** the knife (30, 31) is a rotary knife mounted for free rotation.

18. Device according to claim 17,
**characterised in that** the rotary knife is held on a support (85) which is force-loaded towards the reception gap (90).

19. Device according to claim 16,
**characterised in that** at least one knife (30, 31) is located on both long sides (23, 24) of the conveyor belts (3, 4), and the knives (30, 31) define a common cutting plane (33).

20. Device according to claim 19,
**characterised in that** the cutting plane (33) extends between the conveyor belts (3, 4).

21. Device according to claim 16,
**characterised in that** the wedge element (40, 41) is a rotary element which is located at the level of the knife (30, 31) and mounted for free rotation.

22. Device according to claim 21,
**characterised in that** the wedge element (40, 41) is held on a support (86) which is force-loaded towards the reception gap (90).

23. Device according to claim 21,
**characterised in that** at least one wedge element (40, 41) each is located on both long sides (23, 24) of the conveyor belts (3, 4), and the wedge elements (40, 41) preferably define a common wedge plane (43).

24. Device according to claim 16,
**characterised in that** the conveyor rollers (5, 6) have a single-shell hyperbolic outer surface (17, 18).

25. Device according to claim 24,
**characterised in that** the outer surface (17, 18) of the conveyor rollers (5, 6) forms a partial reception space (19, 20), which accommodates the cocoa pod (1) along a part of its circumference.

26. Device according to claim 16,
**characterised in that** the outlet (81) of the chute (62) extends as a longitudinal opening (82) in the conveying direction (2) of the conveyor belt (3).

27. Device according to claim 26,
**characterised in that** the outlet (81) is bounded by two aligning rails (64), which extend in the direction of the longitudinal opening (82) and have a distance (u) from each other transversely to the conveying direction (2).

## Revendications

1. Procédé pour ouvrir des cabosses, pour recueillir les fèves de cacao contenues dans les enveloppes extérieures de la cabosse, constitué des étapes de procédé suivantes:
• la cabosse (1) est orientée sur la bande transporteuse (3) dans sa direction longitudinale, dans la direction de transport;
• la cabosse (1) est maintenue sur la bande transporteuse (3) dans sa direction longitudinale orientée dans la direction de transport;
• sur la cabosse (1) est appliquée une force de pression qui entraîne une déformation de la cabosse (1);
• la cabosse (1) déformée maintenue sur la bande transporteuse (3) passe devant un couteau (30, 31) le long d'une trajectoire de transport (29),
• le couteau (30, 31) coupe l'enveloppe extérieure (28) de la cabosse (1),
• la profondeur de coupe (T) du couteau (30, 31) dans l'enveloppe extérieure (28) est plus grande que la moitié de l'épaisseur (D) de l'enveloppe extérieure (28),
• la cabosse (1) coupée est cassée,
• la cabosse (1) cassée est éjectée ouverte.

2. Procédé selon la revendication 1,
**caractérisé en ce que** la force de pression est appliquée perpendiculairement au plan de coupe (33) des couteaux (30, 31).

3. Procédé selon la revendication 1,
**caractérisé en ce que** la grandeur de la force de pression est réglée de telle sorte qu'il se forme dans le plan de coupe (33), entre le côté intérieur (27) de l'enveloppe extérieure (38) et la pulpe (26), une cavité (25).

4. Procédé selon la revendication 1,
**caractérisé en ce que** la profondeur de coupe (T) du couteau (30, 31) dans l'enveloppe extérieure (28) est inférieure à l'épaisseur maximale (D) de l'enveloppe extérieure (28).

5. Procédé selon la revendication 1,
**caractérisé en ce que** l'on fait passer la cabosse (1) coupée le long de la trajectoire de transport (29) devant un élément formant coin (40, 41) qui pénètre dans le trait de couteau du couteau (30, 31) et éclate la cabosse (1).

6. Procédé selon l'une des revendications 1 à 5,
**caractérisé en ce que** la cabosse (1) orientée dans la direction longitudinale est fixée entre deux bandes transporteuses (3, 4) et est déplacée à l'aide des bandes transporteuses (3, 4) en position fixée dans la direction de transport (2).

7. Procédé selon la revendication 6,
**caractérisé en ce que** le contour de la cabosse (1) est maintenu dans une fente de réception (90) formée entre les bandes transporteuses (3, 4).

8. Procédé selon la revendication 7,
**caractérisé en ce que** la fente de réception (90) est complétée par un creux dans des rouleaux de transport (5, 6) qui guident la bande transporteuse (3, 4).

9. Procédé selon la revendication 1,
**caractérisé en ce que** le couteau (30, 31) coupe la cabosse (1) dans la direction longitudinale de la pointe (38) jusqu'au bout de tige (39) ou du bout de tige (39) jusqu'à la pointe (38).

10. Procédé selon la revendication 1,
**caractérisé en ce que** le couteau (30, 31) est pressé, en particulier pressé élastiquement, contre l'enveloppe extérieure (28) de la cabosse (1).

11. Procédé selon la revendication 10,
**caractérisé en ce que** le couteau (30, 31) pressé contre la cabosse (1) est entraîné en rotation par la cabosse (1) déplacée dans la direction de transport (2).

12. Procédé selon la revendication 1,
**caractérisé en ce que** la cabosse (1) passe entre deux couteaux (30, 31) qui se trouvent des deux côtés longitudinaux (23, 24) de la bande transporteuse (3, 4) et qui coupent la cabosse (1) simultanément, par intermittence.

13. Procédé selon la revendication 5,
**caractérisé en ce que** l'élément formant coin (40, 41) est pressé, en particulier pressé élastiquement, dans le trait de couteau du couteau (30, 31) dans l'enveloppe extérieure (28) de la cabosse (1).

14. Procédé selon la revendication 13,
**caractérisé en ce que** l'élément formant coin (40, 41) pressé contre la cabosse (1) est entraîné en rotation par la cabosse (1) déplacée dans sa direction de transport (2).

15. Procédé selon la revendication 5,
**caractérisé en ce que** la cabosse (1) passe entre deux éléments formant coins (40, 41) qui se trouvent des deux côtés longitudinaux (23, 24) de la bande transporteuse (3, 4) et qui pénètrent simultanément, au moins par intermittence, dans les traits de couteau de la cabosse (1).

16. Dispositif pour recueillir des fèves de cacao qui sont contenues dans une enveloppe extérieure (28) d'une cabosse (1), avec un déversoir (62) pour déposer des cabosses (1) sur une première bande transporteuse (3) qui passe dans la direction de transport (2) sous une ouverture d'écoulement (81) du déversoir (62), et avec une seconde bande transporteuse (4) qui s'étend au-dessus de la première bande transporteuse (3), après le déversoir (62) dans la direction de transport (2), dans lequel au moins quelques rouleaux de transport (5, 6) des bandes transporteuses (3, 4) sont montés à ressort, et entre les rouleaux de transport (3, 4) et les bandes transporteuses (3, 4) guidées par ceux-ci est délimité une fente de réception (90) pour la fixation par serrage d'une cabosse (1), et entre le déversoir (62) et un déchargement (77) des bandes transporteuses sont prévus au moins un couteau (30, 31) et au moins un élément formant coin (40, 411) orienté vers le plan de coupe (33), qui dépassent dans la fente de réception (90).

17. Dispositif selon la revendication 16,
**caractérisé en ce que** le couteau (30, 31) est un couteau rotatif qui est monté en rotation libre.

18. Dispositif selon la revendication 17,
**caractérisé en ce que** le couteau rotatif est retenu sur un support (85) qui est contraint par une force en direction de la fente de réception (90).

19. Dispositif selon la revendication 16,
**caractérisé en ce que** de chacun des deux côtés longitudinaux (23, 24) des bandes transporteuses (3, 4) est disposé au moins un couteau (30, 31), et les couteaux (30, 31) définissent un plan de coupe (33) commun.

20. Dispositif selon la revendication 19,
**caractérisé en ce que** le plan de coupe (33) s'étend entre les bandes transporteuses (3, 4).

21. Dispositif selon la revendication 16,
**caractérisé en ce que** l'élément formant coin (40, 41) est un élément rotatif qui est disposé à la hauteur du couteau (30, 31) et qui est monté en rotation libre.

22. Dispositif selon la revendication 21,
**caractérisé en ce que** l'élément formant coin (40, 41) est retenu sur un support (86) qui est contraint par une force en direction de la fente de réception (90).

23. Dispositif selon la revendication 21,
**caractérisé en ce que** de chacun des deux côtés longitudinaux (23, 24) des bandes transporteuses (3, 4) est disposé au moins un élément formant coin (40, 41), et les éléments formant coins (40, 41) définissent un plan de coupe (43) de préférence commun.

24. Dispositif selon la revendication 16,
**caractérisé en ce que** les rouleaux de transport (5, 6) présentent une surface latérale (17, 18) hyperboloïde à une nappe.

25. Dispositif selon la revendication 24,
**caractérisé en ce que** la surface latérale (17, 18) des rouleaux de transport (5, 6) forme un espace de réception partiel (19, 20) qui reçoit la cabosse (1) sur une partie de sa circonférence.

26. Dispositif selon la revendication 16,
**caractérisé en ce que** l'ouverture d'écoulement (81) du déversoir (62) s'étend sous la forme d'une ouverture oblongue (82) dans la direction de transport (2) de la bande transporteuse (3).

27. Dispositif selon la revendication 26,
**caractérisé en ce que** l'ouverture d'écoulement (81) est délimitée par deux baguettes d'alignement (64) qui s'étendent dans la direction de l'ouverture oblongue (82) et présentent transversalement par rapport à la direction de transport (2) un écartement mutuel (u).
